# FASCICULE DE BREVET EUROPEEN

(11) **EP 2 723 626 B1**
(45) Date de publication et mention de la délivrance du brevet: **29.07.2015**
(21) Numéro de dépôt: 12731584.4
(22) Date de dépôt: 21.06.2012
(51) Int. Cl.: B62D 25/08, B62D 65/06, B60J 1/00, B62D 25/14, B60R 21/34

(54) **DISPOSITIF DE RENFORT D'UNE TRAVERSE INFERIEURE DE BAIE POUR LA POSE D'UN PARE-BRISE DE VEHICULE AUTOMOBILE**
VERSTÄRKUNGSVORRICHTUNG FÜR EINEN UNTERBALKEN EINER ÖFFNUNG ZUR POSITIONIERUNG EINER WINDSCHUTZSCHEIBE EINES KRAFTFAHRZEUGES
REINFORCING DEVICE FOR A LOWER BEAM OF AN OPENING FOR POSITIONING A MOTOR VEHICLE WINDSHIELD

(30) Priorité: 22.06.2011 FR 1155490
(43) Date de publication de la demande: 30.04.2014
(73) Titulaire: Renault S.A.S., 92100 Boulogne-Billancourt (FR)
(72) Inventeur: CABARET, Nicolas, F-78113 La Hauteville (FR); ANNETTE, Richard, F-78330 Fontenay Le Fleury (FR); DE METZ NOBLAT, Mathieu, F-78150 Le Chesnay (FR)
(74) Mandataire: Renou, Jean-François
(86) Numéro de dépôt international: PCT/FR2012/051401
(87) Numéro de publication internationale: WO 2012/175876

(56) Documents cités:
- FR-A1- 2 697 335
- FR-A1- 2 928 335
- US-A1- 2011 068 607

## Description

La présente invention concerne un dispositif de renfort d'une traverse inférieure de baie du type présentant une partie supérieure flexible apte à se déformer et conçue pour recevoir une bordure inférieure d'un pare-brise de véhicule automobile appliquée à force sur ladite partie supérieure flexible lors de sa mise en place sur le véhicule automobile.

Les véhicules automobiles comprennent une caisse, qui présente une partie avant dans laquelle est logé un groupe motopropulseur, une partie arrière formant coffre et une partie centrale dans laquelle s'étend l'habitacle. La partie avant et la partie centrale sont séparées l'une de l'autre par un tablier transversal comprenant une traverse inférieure de baie contre laquelle vient prendre appui une bordure inférieure du pare-brise. Afin d'assurer son rôle de soutien du pare-brise, la traverse inférieure de baie doit être suffisamment résistante. Aussi, elle est usuellement constituée d'une paroi avant transversale et d'une paroi arrière transversale associées l'une à l'autre, de manière à former un caisson transversal, ou corps creux, et présente une partie supérieure transversale de réception sur laquelle prend directement appui la bordure inférieure du pare-brise. La bordure inférieure du pare-brise est classiquement collée sur la partie supérieure de réception de la traverse inférieure de baie par un joint de colle.

Dans un souci d'améliorer la sécurisation piétonne, les règles de sécurité ont conduit à faire évoluer la conception des zones d'appui du pare-brise et, en particulier, celle de la zone d'encollage en bordure inférieure du pare-brise au niveau de la partie supérieure de la traverse inférieure de baie. La partie supérieure de la traverse inférieure de baie peut ainsi être conçue pour présenter une flexibilité importante de manière à être déformable est à permettre, en cas de choc piéton, c'est-à-dire du mouvement relatif d'une personne vers le pare-brise du véhicule, que le pare-brise précisément puisse s'enfoncer de manière à dissiper une partie de l'énergie mécanique provoquée par le choc et ainsi préserver, autant que faire se peut, les parties vitales dudit piéton et notamment la tête.

Une telle conception de la structure de la traverse inférieure de baie pour la prise en compte du choc piéton interdit notamment la présence de pièces de renforts soudées qui, traditionnellement, contribuent au raidissement de la traverse inférieure de baie et garantissent la géométrie de la partie inférieure du pare-brise. Une telle structure est connue du document US 2011/0068607 A1.

Or, l'atteinte de ces critères de sécurité se manifestant par une grande flexibilité de la partie supérieure de la traverse inférieure de baie, laquelle définissant la surface d'encollage en bordure inférieure du pare-brise, complique l'opération d'encollage du pare-brise, car les appuis de celui-ci en partie inférieure deviennent trop souples pour permettre une compression du joint de colle à la géométrie désirée. En outre, il existe un risque de fléchissement de la partie supérieure de la traverse inférieure de baie lors des opérations de dépose et de repose du pare-brise, qui n'est pas souhaitable.

Dans ce contexte, la présente invention a pour but de pallier les inconvénients précités et, en particulier, de fournir un dispositif de renfort d'une traverse inférieure de baie du type précité, qui tout en maintenant ses capacités de déformation requises par les nouvelles règles de sécurité relatives à la sécurisation piétonne, contribue à garantir une mise en place sûre et aisée du paré-brise lors des opérations de mise en place dû pare-brise sur le véhicule automobile.

A cet effet, le dispositif de l'invention, par ailleurs conforme à la définition générique qu'en donne le préambule ci-dessus, est essentiellement caractérisé en ce qu'il comprend des moyens amovibles de raidissement de la traverse inférieure de baie comprenant au moins une première et une deuxième partie mobiles en pivotement l'une par rapport à l'autre entre une position rétractée et au moins une position déployée dans laquelle lesdites première et deuxième parties sont aptes à coopérer pour maintenir la partie supérieure flexible de la traverse inférieure de baie lors de l'application à force du pare-brise.

Selon un mode de réalisation de l'invention, la première partie comprend une platine de fixation apte à être rapportée de manière amovible sur un élément de support agencé sur une paroi avant transversale de la traverse inférieure de baie surplombée par la partie supérieure flexible de la traverse inférieure de baie, à distance de la partie supérieure flexible, la deuxième partie comprend une came de maintien présentant un bord d'appui apte à venir en appui contre une surface inférieure de la partie supérieure flexible de la traverse inférieure de baie dans ladite position déployée, le dispositif comprenant en outre des moyens de verrouillage pour verrouiller la came de maintien dans ladite position déployée.

Avantageusement, la came de maintien peut être montée solidaire d'un organe mobile d'actionnement dont une première extrémité est articulée sur la platine de fixation par l'intermédiaire d'une liaison pivot et dont une seconde extrémité opposée comprend un organe de préhension manuelle permettant d'actionner la came de maintien selon un mouvement de rotation guidée par la liaison pivot de la position rétractée vers la position déployée, la came de maintien étant montée solidaire de l'organe mobile d'actionnement entre les première et seconde extrémités.

De préférence, la liaison pivot est une liaison de type quart de tour. Selon un mode de réalisation, les moyens de verrouillage peuvent comprendre un organe de fixation agencé au niveau de la première extrémité de l'organe mobile d'actionnement et comportant une forme de verrouillage apte à coopérer avec une ouverture de forme correspondante pratiquée dans l'élément de support.

De préférence, l'organe de fixation est un organe de fixation de type quart de tour, de sorte que la rotation d'un quart de tour de l'organe de préhension manuelle permet de verrouiller la came de maintien dans la position déployée.

Avantageusement, la platine de fixation comprend une surface d'appui destinée à être positionnée en appui contre une paroi frontale de l'élément de support, la surface d'appui comprenant en outre des moyens de guidage aptes à coopérer avec des moyens de guidage correspondants agencés sur l'élément de support pour guider la mise en place de la platine de fixation sur l'élément de support

De préférence, les moyens de guidage peuvent servir de moyens anti-rotation pour empêcher la platine de fixation de tourner sur l'élément de support lorsqu'elle est rapportée sur celui-ci.

Selon un mode de réalisation, les moyens de guidage peuvent comprendre deux pions s'étendant perpendiculairement à la surface d'appui et destinés à s'engager dans des orifices correspondant ménagés à travers la paroi frontale de l'élément de support.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un schéma illustrant la mise en place d'un dispositif de renfort de la traverse inférieure de baie conforme à l'invention dans sa position rétractée ;
- la Figure 2 est un schéma illustrant le dispositif de renfort de la figure 1 dans sa position déployée ;
- les Figures 3a et 3b illustrent une vue de détail du dispositif de renfort illustré aux figures 1 et 2, respectivement en position rétractée et en position déployée ;
- les Figures 4a et 4b illustrent une autre vue de détail du dispositif de renfort illustré aux figures 1 et 2, respectivement en position rétractée et en position déployée.

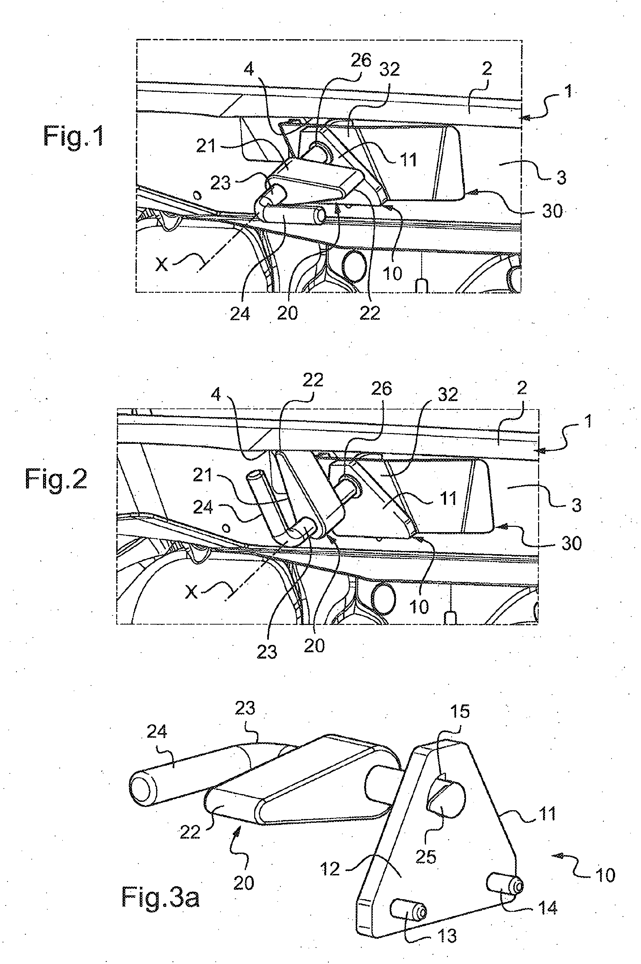

La figure 1 montre une traverse inférieure de baie 1 comprenant une partie supérieure 2, correspondant à la surface d'encollage sur laquelle vient prendre appui la bordure inférieure d'un pare-brise lors de la mise en place de celui-ci. La partie supérieure 2 est constituée d'une simple tôle s'étendant transversalement par rapport au véhicule automobile et venant en saillie vers l'avant par rapport à un plan formé par une paroi avant transversale 3 formant un élément de fermeture de la traverse inférieure de baie et s'étendant entre le tablier du véhicule automobile et la partie supérieure 2 de la traverse inférieure de baie. La partie supérieure 2 de la traverse inférieure de baie présente ainsi une certaine flexibilité propre à répondre aux contraintes de la sécurisation piétonne, comme expliqué plus haut.

Pour garantir la mise en place du pare-brise en dépit de cette flexibilité de la surface d'encollage de la bordure inférieure du pare-brise, on prévoit de mettre en oeuvre dans l'environnement immédiat de la traverse inférieure de baie un dispositif escamotable de renfort de la traverse inférieure de baie permettant de maintenir la partie supérieure flexible pendant la durée de l'opération de mise en place du pare-brise, en particulier en usine.

Le dispositif de renfort est constitué principalement de deux parties 10 et 20 montées mobiles en pivotement l'une par rapport à l'autre entre une position rétractée, telle qu'illustrée à la figure 1, et une position déployée, telle qu'illustrée à la figure 2, dans laquelle la partie supérieure flexible de la traverse inférieure de baie est maintenue.

Plus précisément, une première partie 10 du dispositif est constituée d'une platine de fixation 11, destinée à permettre l'implantation du dispositif de renfort dans l'environnement immédiat de la traverse inférieure de baie. La platine de fixation 11 est prévue pour être rapportée de manière amovible sur un élément de support 30 agencé au niveau de la paroi avant transversale 3 de la traverse inférieure de baie, à distance de la partie supérieure flexible 2 de la traverse inférieure de baie surplombant la paroi avant transversale 3.

Selon le mode de réalisation décrit aux figures 1 et 2 et suivantes, l'élément de support 30 pour la platine de fixation est constitué d'un support en tôle en forme de pont ou pontet, présentant une paroi frontale 32 terminée par deux bordures latérales 34, 36 fixées à la paroi transversale avant 3 de la traverse inférieure de baie par soudage par exemple.

Selon une variante de réalisation, l'élément de support n'est pas constitué par un élément rapporté mais, au contraire, peut être constitué par la paroi avant transversale 3 elle-même de la traverse inférieure de baie, la paroi frontale 32 sur laquelle est destinée à être rapportée de manière amovible la platine de fixation 11 étant alors formée par une partie de tôlerie adaptée à cet effet de la paroi avant transversale 3 de la traverse inférieure de baie.

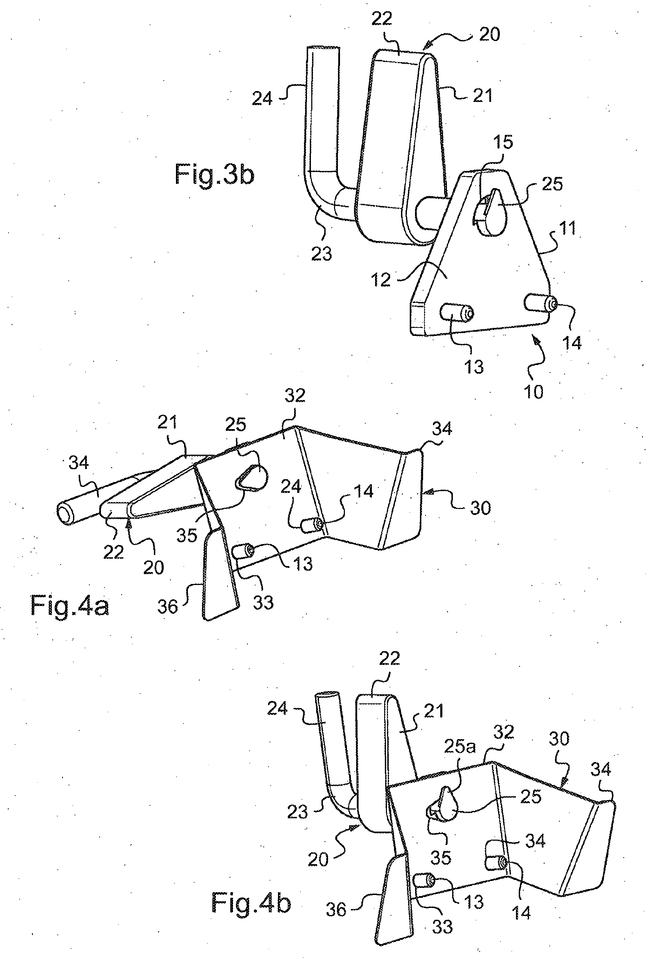

Comme illustré plus en détail aux figures 3a, 3b et 4a, 4b, la platine de fixation 11 comprend une surface d'appui 12 destinée à être positionnée en appui contre la paroi frontale 32 de l'élément de support 30. En outre, la surface d'appui 12 de la platine de fixation 11 comprend deux pions 13, 14 s'étendant perpendiculairement à la surface d'appui 12 et destinés à s'engager dans des orifices correspondant 33, 34 ménagés à travers la paroi frontale 32 de l'élément de support 30. Les pions 13, 14 et les orifices correspondant 33, 34 coopèrent pour guider la mise en place dé la platine de fixation 11 sur l'élément de support 30, tout en servant de moyens anti-rotation pour empêcher la platine de fixation 11 de tourner sur l'élément de support 30 lorsqu'elle est rapportée sur celui-ci.

Une deuxième partie 20 du dispositif de renfort est constituée d'une came de maintien 21 présentant un bord d'appui 22, formant un appui linéaire, destiné à venir en appui contre la surface inférieure 4 de la partie supérieure flexible 2 de la traverse inférieure de baie en position déployée. Pour ce faire, la came de maintien 21 est monté solidaire d'un organe mobile d'actionnement 23, se présentant sous la forme d'un arbre, dont une extrémité est articulée sur la platine de fixation 11 par l'intermédiaire d'une liaison pivot d'axe normal par rapport au plan formé par la platine de fixation 11 et confondu avec l'axe longitudinal X de l'arbre formant l'organe mobile d'actionnement 23. Comme illustré aux figures 3a et 3b, la platine de fixation 11 est par exemple munie d'un perçage 15 dans lequel un palier est destiné à supporter l'extrémité de l'arbre formant l'organe mobile d'actionnement 23 et à en assurer le guidage en rotation. Par ailleurs, l'arbre est muni d'une embase de butée 26 (figures 1 et 2), qui lui assure un appui par rapport à la platine de fixation 11 lorsque son extrémité coopère avec le palier pour former la liaison pivot à travers le perçage 15.

L'autre extrémité opposée de l'arbre formant l'organe mobile d'actionnement 23 sur lequel est montée la came de maintien 21 comprend un organe de préhension manuelle en forme de poignée 24, permettant d'actionner la came de maintien 21 selon un mouvement de rotation guidée par la liaison pivot de la position rétractée à la position déployée.

La liaison entre l'extrémité de l'organe mobile d'actionnement 23 et la platine de fixation 11 est de préférence du type quart de tour. Aussi, une rotation sensiblement d'un quart de tour de la poignée 24 guidée par la liaison pivot permet d'amener la came de maintien 21 de la position rétractée (figure 1), où le bord d'appui 22 de la came de maintien 21 est éloigné de la partie supérieure flexible 2 de la traverse inférieure de baie, vers la position déployée (figure 2), où le bord d'appui 22 de la came de maintien 21 vient en appui contre la surface inférieure 4 de la partie supérieure flexible 2 de la traverse inférieure de baie.

En outre, la rotation d'un quart de tour de la poignée 24 permet également de verrouiller la came de maintien 21 en position déployée, de la manière qui va être expliquée ci-après.

Comme illustré aux figures 4a et 4b, l'élément de support 30 comprend une ouverture 35, ménagée à travers la paroi frontale 32 de l'élément de support 30. Cette ouverture 35 est prévue pour être située dans le prolongement de l'axe de la liaison pivot, sensiblement en regard du perçage 15 pratiqué dans la platine de fixation 11, lorsque cette dernière est rapportée sur l'élément de support 30 lors de la mise en place du dispositif de renfort. L'extrémité de l'arbre formant l'organe mobile d'actionnement 23 articulée sur la platine de fixation par la liaison pivot est en outre adaptée pour déboucher derrière la paroi frontale 32 de l'élément de support 30 à travers le perçage 15 et l'ouverture 35. Cette extrémité se termine par un organe de fixation de type quart de tour comprenant une forme de verrouillage 25 telle qu'un doigt. Le doigt 25 a toute forme appropriée et il est doté d'au moins une échancrure de maintien 25a pour coopérer avec l'ouverture 35, de sorte que lorsqu'on tourne d'un quart de tour la poignée 24, le doigt 25 ne puisse être délogé de l'ouverture 35, verrouillant ainsi la came de maintien 21 dans la position déployée.

Dans cette position, la came de maintien 21 permet d'étayer la partie supérieure flexible 2 de la traverse inférieure de baie et d'assurer en conséquence la géométrie de celle-ci au nominal pendant la durée de mise en place du pare-brise. Le dispositif de renfort pourra être démonté ultérieurement après réticulation de la colle pare-brise.

Le dispositif de renfort tel qu'il vient d'être décrit est particulièrement adapté pour être employé sur les chaînes de montage de véhicules automobiles du fait de sa facilité et de sa rapidité de mise en oeuvre, notamment dans la mesure où il ne nécessite aucun outillage spécifique pour son montage et démontage par un opérateur.

Les différents éléments constitutifs du dispositif de renfort pourront être réalisés en métal ou, de préférence, en matériau composite.

## Revendications

1. Dispositif de renfort d'une traverse inférieure de baie (1) du type présentant une partie supérieure flexible (2) apte à se déformer et conçue pour recevoir une bordure inférieure de pare-brise de véhicule automobile appliquée à force sur ladite partie supérieure flexible lors de la mise en place du parebrise sur le véhicule automobile, **caractérisé en ce qu'**il comprend des moyens amovibles de raidissement de la traverse inférieure de baie comprenant au moins une première (10) et une deuxième (20) partie mobiles en pivotement l'une par rapport à l'autre entre une position rétractée et au moins une position déployée dans laquelle lesdites première et deuxième parties sont aptes à coopérer pour maintenir la partie supérieure flexible (2) de la traverse inférieure de baie lors de l'application à force du pare-brise.

2. Dispositif selon la revendication 1, **caractérisé en ce que** la première partie (10) comprend une platine (11) de fixation apte à être rapportée dé manière amovible sur un élément de support (30) agencé sur une paroi avant transversale (3) de la traverse inférieure de baie (1) surplombée par la partie supérieure flexible (2) de la traverse inférieure de baie (1), à distance de la partie supérieure flexible (2), la deuxième partie (20) comprend une came de maintien (21) présentant un bord d'appui (22) apte à venir en appui contre une surface inférieure (4) de la partie supérieure flexible (2) de la traverse inférieure de baie (1) dans ladite position déployée **et en ce qu'**il comprend des moyens de verrouillage pour verrouiller la came de maintien (21) dans ladite position déployée.

3. Dispositif selon la revendication 2, **caractérisé en ce que** la came de maintien (21) est montée solidaire d'un organe mobile d'actionnement (23) dont une première extrémité est articulée sur la platine de fixation (11) par l'intermédiaire d'une liaison pivot et dont une seconde extrémité opposée comprend un organe de préhension manuelle (24) permettant d'actionner la came de maintien (21) selon un mouvement de rotation guidée par la liaison pivot de la position rétractée vers la position déployée, la came de maintien (21) étant montée solidaire de l'organe mobile d'actionnement (23) entre les première et seconde extrémités.

4. Dispositif selon la revendication 3, **caractérisé en ce que** la liaison pivot est une liaison de type quart de tour.

5. Dispositif selon l'une quelconque des revendications 3 ou 4, **caractérisé en ce que** les moyens de verrouillage comprennent un organe de fixation agencé au niveau de la première extrémité de l'organe mobile d'actionnement et comportant une forme de verrouillage (25) apte à coopérer avec une ouverture (35) de forme correspondante pratiquée dans l'élément de support (30).

6. Dispositif selon la revendication 5, **caractérisé en ce que** l'organe de fixation est un organe de fixation de type quart de tour, de sorte que la rotation d'un quart de tour de l'organe de préhension manuelle (24) permet de verrouiller la came de maintien (21) dans la position déployée.

7. Dispositif selon l'une quelconque des revendications 2 à 6, **caractérisé en ce que** la platine de fixation (11) comprend une surface d'appui (12) destinée à être positionnée en appui contre une paroi frontale (32) de l'élément de support (30), la surface d'appui (12) comprenant des moyens de guidage aptes à coopérer avec des moyens de guidage correspondants agencés sur l'élément de support (30) pour guider la mise en place de la platine de fixation (11) sur l'élément de support (30).

8. Dispositif selon la revendication 7, **caractérisé en ce que** les moyens de guidage sont aptes à servir de moyens anti-rotation pour empêcher la platine de fixation (11) de tourner sur l'élément de support (30) lorsqu'elle est rapportée sur celui-ci.

9. Dispositif selon l'une quelconque des revendications 6 ou 7, **caractérisé en ce que** les moyens de guidage comprennent deux pions (13, 14) s'étendant perpendiculairement à la surface d'appui et destinés à s'engager dans des orifices correspondant (33, 34) ménagés à travers la paroi frontale (32) de l'élément de support (30).

## Patentansprüche

1. Verstärkungsvorrichtung eines unteren Querträgers einer Öffnung (1) der Art, die einen oberen flexiblen Teil (2) aufweist, der in der Lage ist, sich zu verformen und dafür ausgelegt ist, eine untere Umrandung einer Windschutzscheibe eines Kraftfahrzeugs aufzunehmen, die mit Kraft auf den oberen flexiblen Teil während der Montage der Windschutzscheibe an dem Kraftfahrzeug aufgesetzt wird, **dadurch gekennzeichnet, dass** sie abnehmbare Aussteifungsmittel des unteren Querträgers der Öffnung umfasst, die mindestens einen ersten (10) und einen zweiten (20) Teil umfassen, die im Verhältnis zueinander zwischen einer eingezogenen Position und mindestens einer ausgefahrenen Position schwenkbeweglich sind, in welcher der erste und zweite Teil in der Lage sind, miteinander zu zusammenzuwirken, um den oberen flexiblen Teil (2) des unteren Querträgers der Öffnung zu halten, während die Kraft auf die Windschutzscheibe ausgeübt wird.

2. Vorrichtung nach Anspruch 1, **dadurch gekennzeichnet, dass** der erste Teil (10) eine Befestigungsplatte (11) umfasst, die in der Lage ist, auf abnehmbare Weise an einem Unterstützungselement (30) angebracht zu werden, das an einer vorderen Querwand (3) des unteren Querträgers der Öffnung (1) angeordnet ist, über die der obere flexible Teil (2) des unteren Querträgers der Öffnung (1) entfernt von dem oberen flexiblen Teil (2) übersteht, der zweite Teil (20) einen Haltekeil (21) umfasst, der einen Aufstützrand (22) aufweist, der in der Lage ist, sich gegen eine untere Fläche (4) des oberen flexiblen Teils (2) des unteren Querträgers der Öffnung (1) in der ausgefahrenen Position abzustützen, und **dadurch gekennzeichnet, dass** er Blockierungsmittel umfasst, um den Haltekeil (21) in der ausgefahrenen Position zu blockieren.

3. Vorrichtung nach Anspruch 2, **dadurch gekennzeichnet, dass** der Haltekeil (21) fest verbunden mit einem beweglichen Betätigungselement (23) montiert ist, dessen erstes Ende an der Befestigungsplatte (11) mittels einer Schwenkverbindung angelenkt ist, und dessen zweites gegenüberliegendes Ende ein manuelles Griffelement (24) umfasst, das ermöglicht, den Haltekeil (21) in einer Drehbewegung, geführt durch die Schwenkverbindung, aus der eingezogenen Position in die ausgefahrene Position zu betätigen, wobei der Haltekeil (21) fest verbunden mit dem beweglichen Betätigungselement (23) zwischen dem ersten und zweiten Ende montiert ist.

4. Vorrichtung nach Anspruch 3, **dadurch gekennzeichnet, dass** die Schwenkverbindung eine Verbindung der Art einer Vierteldrehung ist.

5. Vorrichtung nach irgendeinem der Ansprüche 3 oder 4, **dadurch gekennzeichnet, dass** die Blockierungsmittel ein Befestigungselement umfassen, das an dem ersten Ende des beweglichen Betätigungselements angeordnet ist, und eine Blockierungsform (25) aufweist, die in der Lage ist, mit einer Öffnung (35) entsprechender Form zusammenzuwirken, die in dem Unterstützungselement (30) ausgebildet sind.

6. Vorrichtung nach Anspruch 5, **dadurch gekennzeichnet, dass** das Befestigungselement ein Befestigungselement der Art einer Vierteldrehung ist, so dass die Rotation um eine Vierteldrehung des manuellen Griffelements (24) ermöglicht, den Haltekeil (21) in der ausgefahrenen Position zu blockieren.

7. Vorrichtung nach irgendeinem der Ansprüche 2 bis 6, **dadurch gekennzeichnet, dass** die Halteplatte (11) eine Abstützfläche (12) umfasst, die dazu vorgesehen ist, abgestützt gegen eine Kopfwand (32) des Unterstützungselements (30) positioniert zu werden, wobei die Abstützfläche (12) Führungsmittel umfasst, die in der Lage sind, mit entsprechenden Führungsmitteln zusammenzuwirken, die an dem Unterstützungselement (30) angeordnet sind, um die Befestigungsplatte (11) bei der Anordnung an dem Unterstützungselement (30) zu führen.

8. Vorrichtung nach Anspruch 7, **dadurch gekennzeichnet, dass** die Führungsmittel in der Lage sind, als Rotationsschutz zu dienen, um zu verhindern, dass die Befestigungsplatte (11) sich auf dem Unterstützungselement (30) dreht, wenn sie an ihm angebracht ist.

9. Vorrichtung nach irgendeinem der Ansprüche 6 oder 7, **dadurch gekennzeichnet, dass** die Führungsmittel zwei Stifte (13, 14) umfassen, die sich senkrecht zu der Abstützfläche erstrecken und dazu vorgesehen sind, in entsprechende Öffnungen (33, 34) einzugreifen, die durch die Kopfwand (32) des Unterstützungselements (30) hindurch ausgebildet sind.

## Claims

1. Device for reinforcing a window opening lower crossmember (1) of the type having a deformable flexible upper part (2) designed to receive a motor vehicle windscreen lower edge force-fitted onto the said flexible upper part when the windscreen is installed on the motor vehicle, **characterized in that** it comprises removable means for stiffening the window opening lower crossmember, comprising at least a first (10) and a second (20) part which are pivotable with respect to one another between a retracted position and at least one deployed position in which the said first and second parts are able to cooperate in order to retain the flexible upper part (2) of the window opening lower crossmember during the force-fitting of the windscreen.

2. Device according to Claim 1, **characterized in that** the first part (10) comprises a fixing plate (11) able to be attached in a removable manner to a support element (30) arranged on a transverse front wall (3) of the window opening lower crossmember (1) over which hangs the flexible upper part (2) of the window opening lower crossmember (1), at a distance from the flexible upper part (2), the second part (20) comprises a retaining cam (21) having a bearing edge (22) able to bear against a lower surface (4) of the flexible upper part (2) of the window opening lower crossmember (1) in the said deployed position, and **in that** it comprises locking means for locking the retaining cam (21) in the said deployed position.

3. Device according to Claim 2, **characterized in that** the retaining cam (21) is mounted securely to a moveable actuating member (23) of which a first end is articulated on the fixing plate (11) via a pivot connection and of which a second opposite end comprises a manual gripping member (24) enabling the retaining cam (21) to be actuated with a rotational movement guided by the pivot connection from the retracted position to the deployed position, the retaining cam (21) being mounted securely to the moveable actuating member (23) between the first and second ends.

4. Device according to Claim 3, **characterized in that** the pivot connection is a connection of the quarterturn type.

5. Device according to either one of Claims 3 and 4, **characterized in that** the locking means comprise a fixing member arranged at the first end of the moveable actuating member and comprising a locking shape (25) able to cooperate with an opening (35) of corresponding shape formed in the support element (30).

6. Device according to Claim 5, **characterized in that** the fixing member is a fixing member of the quarterturn type, such that the rotation of the manual gripping member (24) by a quarter of a turn makes it possible to lock the retaining cam (21) in the deployed position.

7. Device according to any one of Claims 2 to 6, **characterized in that** the fixing plate (11) comprises a bearing surface (12) intended to be positioned in bearing contact against a front wall (32) of the support element (30), the bearing surface (12) comprising guide means able to cooperate with corresponding guide means arranged on the support element (30) in order to guide the installation of the fixing plate (11) on the support element (30).

8. Device according to Claim 7, **characterized in that** the guide means are able to serve as an anti-rotation means so as to prevent the fixing plate (11) from rotating on the support element (30) when it is attached thereto.

9. Device according to either one of Claims 6 and 7, **characterized in that** the guide means comprise two studs (13, 14) extending perpendicularly to the bearing surface and intended to engage in corresponding orifices (33, 34) formed through the front wall (32) of the support element (30).
